# FASCICULE DE BREVET EUROPEEN

(11) **EP 4 197 919 B1**
(45) Date de publication et mention de la délivrance du brevet: **17.06.2026**
(21) Numéro de dépôt: 22212405.9
(22) Date de dépôt: 09.12.2022
(51) Int. Cl.: B64F 5/10, B64C 1/06, B64C 1/18

(54) **PROCÉDÉ D ASSEMBLAGE D'UNE POINTE AVANT D'UN AÉRONEF UTILISANT UN MODULE DE PLANCHER COMME CONFORMATEUR DE FORME**
VERFAHREN ZUM ZUSAMMENBAU EINER VORDEREN SPITZE EINES FLUGZEUGS MIT EINEM BODENMODUL ALS FORMBILDNER
METHOD FOR ASSEMBLING A NOSE CONE OF AN AIRCRAFT USING A FLOOR MODULE AS A SHAPE SHAPER

(30) Priorité: 16.12.2021 FR 2113659
(43) Date de publication de la demande: 21.06.2023
(73) Titulaire: AIRBUS OPERATIONS (S.A.S.), 31060 Toulouse (FR)
(72) Inventeur: AGUERA, Damien, 31060 TOULOUSE (FR); CHALQI, Salim, 31060 TOULOUSE (FR); TONNELE, Arnaud, 31060 TOULOUSE (FR); LAMPURE, Yannick, 31060 TOULOUSE (FR); MADY, Alain, 31060 TOULOUSE (FR)
(74) Mandataire: Airbus-OPS SAS

(56) Documents cités:
- EP-A1- 2 915 740
- FR-A1- 2 930 521
- FR-A1- 3 048 227
- US-A1- 2015 102 170

## Description

### Domaine technique

La présente invention concerne un procédé d'assemblage d'un tronçon de fuselage d'un aéronef, et notamment d'une pointe avant de l'aéronef.

### Etat de la technique

Une pointe avant d'un aéronef, en particulier d'un avion de transport, correspond à la partie avant de l'aéronef comprenant au moins le poste de pilotage et en général également, dans le cas d'un avion de transport, une partie de fuselage pourvue des portes d'accès latérales avant de l'avion de transport.

Généralement, un procédé d'assemblage d'une telle pointe avant d'un aéronef consiste à assembler une pluralité de pièces de fuselage particulières, fabriquées préalablement. Chacune de ces pièces de fuselage correspond, le plus souvent, à une partie (ou tronçon) longitudinale, par exemple, sensiblement semi-cylindrique.

Le procédé d'assemblage comprend, généralement, une succession d'étapes d'assemblage. Il consiste à prendre une pièce de fuselage particulière initiale, généralement une pièce inférieure devant être agencée le plus vers l'avant de la pointe avant, comme pièce initiale de la structure à assembler, puis à assembler successivement, étape par étape, d'autres parties de fuselage à la structure en train d'être ainsi assemblée. Ces pièces de fuselage sont assemblées en mettant en œuvre des opérations de moulage/réglage (« molding/rigging » en anglais) qui sont longues et relativement complexes. Certaines des pièces de fuselage comprennent une partie de plancher de sorte que, lorsque toutes les pièces de fuselage sont assemblées ensemble, la pointe avant obtenue intègre directement un plancher formé des différentes parties de plancher jointes ensemble lors de l'assemblage.

Pour la mise en œuvre d'un tel procédé d'assemblage, il est nécessaire, à chaque étape, d'aligner exactement la pièce de fuselage à assembler et le cas échéant également la partie de plancher qu'elle comprend, à la structure déjà assemblée. De plus, il est nécessaire de prévoir des moyens pour amener et maintenir en cours d'assemblage le contour de la structure, dans la forme recherchée. L'ensemble de ce procédé d'assemblage est donc complexe et doit généralement être réalisé au même poste d'assemblage.

Le brevet US20150102170 décrit un système d'assemblage à auto alignement pour l'assemblage et l'alignement d'un plancher dans un corps de fuselage.

Le brevet EP2915740 présente un dispositif de positionnement et d'alignement d'une traverse par rapport à un cadre de fuselage.

Le brevet FR3048227 décrit un plancher unitaire qui se déplace horizontalement puis verticalement pour permettre aux traverses du plancher de venir à l'altitude des oreilles de déport des cadres auxquels le plancher va être fixé.

Le brevet FR2930521 décrit une structure de bord prévue pour permettre la fixation d'un même module de plancher invariant.

Un tel procédé d'assemblage peut être amélioré.

### Exposé de l'invention

La présente invention concerne un procédé amélioré d'assemblage d'un tronçon de fuselage d'un aéronef, en particulier d'un avion de transport, et notamment d'une pointe avant de l'aéronef.

Selon l'invention, ledit procédé d'assemblage est défini par la revendication 1.

Ainsi, grâce à l'invention, le module de plancher qui présente au moins une largeur prédéterminée telle que prescrite permet, lorsqu'il est intégré dans le corps de fuselage, de conférer au corps de fuselage qui est légèrement flexible sa forme recherchée et définitive. La forme définitive n'a donc pas à être définitivement établie et conservée au fur et à mesure de l'assemblage, mais elle est établie après l'assemblage des pièces de fuselage lors de l'intégration du module de plancher (à savoir auxdites étapes de montage et de fixation) qui met en œuvre une fonction de conformateur de forme, ce qui permet notamment de simplifier le procédé d'assemblage.

Ledit procédé s'applique à tout tronçon de fuselage (fermé de façon circonférentielle) d'un aéronef, et notamment à la pointe avant de l'aéronef.

Dans un mode de réalisation préféré, l'étape de fixation consiste au moins à fixer les deux extrémités d'au moins certaines desdites traverses du module de plancher, de part et d'autre du corps de fuselage, à chaque fois en un point de fixation.

De façon avantageuse, lesdites traverses sont pourvues d'un trou à chacune de leurs deux extrémités, les deux trous représentant lesdits points de fixation, les centres des deux trous étant distants l'un de l'autre de ladite largeur prédéterminée.

En outre, avantageusement, l'étape de fixation consiste, pour chaque point de fixation entre une extrémité d'une traverse et le corps de fuselage, à amener un trou pratiqué dans le corps de fuselage en superposition d'un trou pratiqué à l'extrémité de la traverse, puis à insérer un élément de fixation dans les deux trous ainsi superposés.

De préférence, pour le corps de fuselage, au moins certains des trous sont pratiqués dans des pattes de fixation solidaires de cadres du corps de fuselage.

Par ailleurs, avantageusement, la succession d'étapes d'assemblage consiste à prendre une pièce de fuselage comme pièce initiale d'une structure d'assemblage et à assembler l'une après l'autre, étape par étape, les autres pièces de fuselage à cette structure d'assemblage.

En outre, dans un mode de réalisation particulier, d'une part, la succession d'étapes d'assemblage, et d'autre part, l'étape de montage et l'étape de fixation sont mises en oeuvre à des postes d'assemblage différents.

### Brève description des figures

Les figures annexées feront bien comprendre comment l'invention peut être réalisée. Sur ces figures, des références identiques désignent des éléments semblables.
La figure 1 est le schéma synoptique d'un mode de réalisation particulier d'un procédé d'assemblage d'une pointe avant d'un aéronef.
La figure 2 est une vue schématique, en coupe transversale, d'une pointe avant d'un aéronef assemblée conformément audit procédé d'assemblage.
La figure 3 montre quatre vues, en perspective, qui illustrent des étapes successives d'un exemple d'assemblage de pièces de fuselage pour former un corps de fuselage d'une pointe avant.
La figure 4 est une vue de côté du corps de fuselage dans lequel va être introduit un module de plancher, conformément à une étape de montage du procédé d'assemblage.
La figure 5 est une vue partielle, en perspective, d'une extrémité d'une traverse du module de plancher qui est en train d'être fixée sur une patte de fixation d'un cadre du corps de fuselage.
La figure 6 est une vue similaire à celle de la figure 5 pour laquelle la fixation a été réalisée.

### Description détaillée

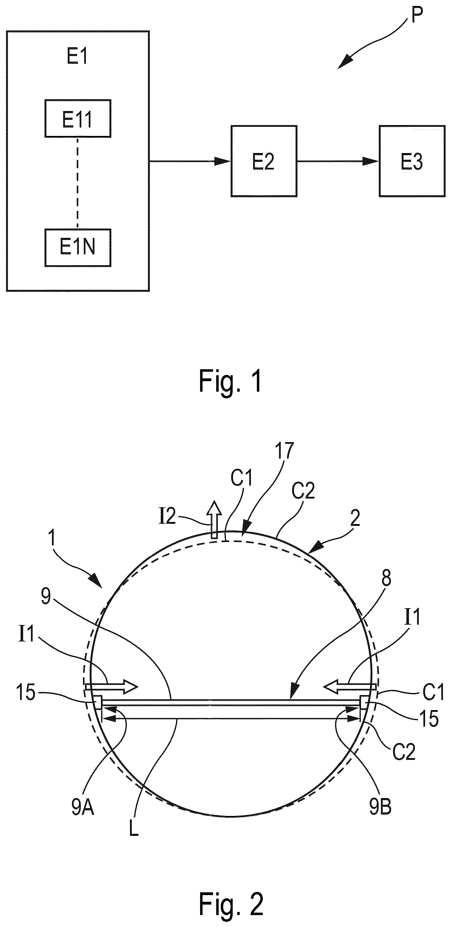

Le procédé d'assemblage P représenté schématiquement sur la figure 1 est un procédé d'assemblage d'une pointe avant 1 (figure 2) d'un aéronef, en particulier d'un avion de transport. La pointe avant 1 correspond à la partie avant de l'aéronef comprenant au moins le poste de pilotage et, en général, également une partie de fuselage pourvue des portes d'accès latérales avant de l'aéronef.

Dans le cadre de la présente invention, ledit procédé d'assemblage peut être appliqué à l'assemblage de tronçons de fuselage de l'aéronef autres que la pointe avant, comme précisé ci-dessous.

Le procédé d'assemblage P comprend, tout d'abord, une succession E1 d'étapes d'assemblage E11 à E1N. N est un entier supérieur à 2 et est, par exemple, compris entre 3 et 6.

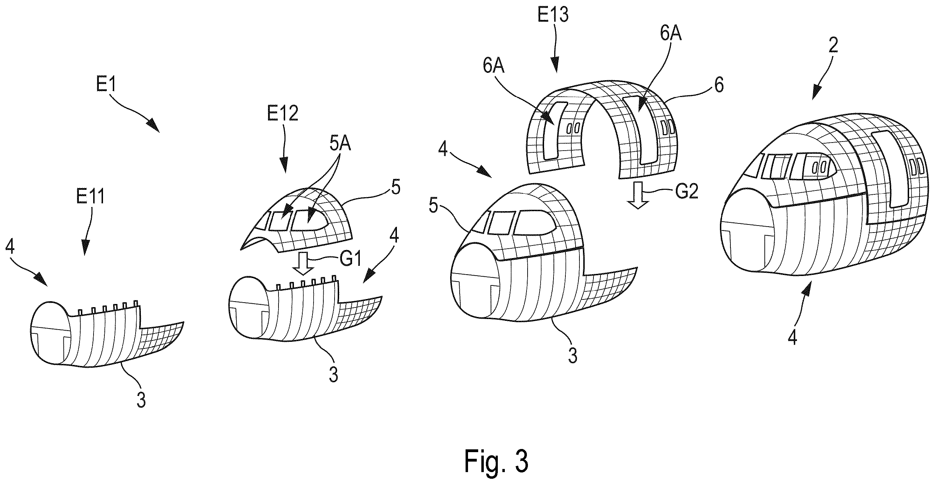

Les différentes étapes E11, E12 et E13 de la succession E1, telles que représentées dans un exemple particulier sur la figure 3, consistent à assembler une pluralité de pièces de fuselage 3, 5, et 6 particulières de manière à former un corps de fuselage 2 pour la pointe avant de l'aéronef. Ces pièces de fuselage 3, 5, et 6 particulières (c'est-à-dire distinctes et précisément définies) sont fabriquées, de façon usuelle, antérieurement à la mise en œuvre du procédé d'assemblage P.

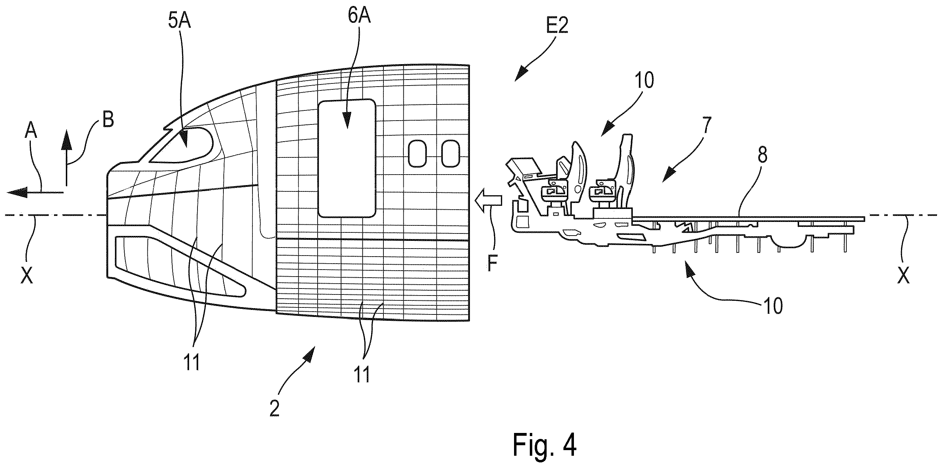

Dans un mode de réalisation préféré, les pièces de fuselage 3, 5, et 6 à assembler présentent, chacune, la forme d'une partie d'un tronçon longitudinal, c'est-à-dire d'un tronçon de structure allongé dans la direction de l'axe longitudinal X-X (figure 4) du corps de fuselage 2, et également de l'axe longitudinal de la pointe avant ainsi que de l'aéronef. Généralement, ces pièces de fuselage sont partiellement cylindriques et notamment sensiblement semi-cylindriques, et elles correspondent soit à une partie (partiellement cylindrique et notamment semi-cylindrique) basse (ou inférieure), soit à une partie (partiellement cylindrique et notamment semi-cylindrique) haute (ou supérieure) d'une partie avant de l'aéronef, comme représenté dans l'exemple de la figure 3. Les pièces de fuselage 3, 5, et 6 comprennent notamment, de façon usuelle, des cadres et des lisses fixées ensemble.

Dans la description suivante :
- le terme « avant » désigne le sens défini vers l'avant du corps de fuselage 2 (et donc de la pointe avant 1) dans le sens illustré par une flèche A sur la figure 4 ;
- le terme « arrière » désigne le sens défini vers l'arrière du corps de fuselage 2 (et donc de la pointe avant 1) dans le sens opposé à celui illustré par la flèche A sur la figure 4 ;
- le terme « haut » désigne le sens défini vers le haut du corps de fuselage 2 (et donc de la pointe avant 1) dans le sens illustré par une flèche B sur la figure 4 ; et
- le terme « bas » désigne le sens défini vers le bas du corps de fuselage 2 (et donc de la pointe avant 1) dans le sens opposé à celui illustré par la flèche B sur la figure 4.

La succession E1 d'étapes d'assemblage du procédé d'assemblage P consiste à prendre une pièce de fuselage comme pièce initiale d'une structure d'assemblage (à savoir une structure en cours d'assemblage) et à assembler l'une après l'autre, étape par étape, les autres pièces de fuselage à cette structure d'assemblage.

Plus précisément, dans l'exemple de la figure 3, la succession E1 d'étapes d'assemblage du procédé d'assemblage P comprend, successivement :
- une étape d'assemblage E11 consistant à utiliser la pièce de fuselage 3 comme pièce initiale de la structure d'assemblage 4. Cette pièce de fuselage 3 correspond à une pièce basse sensiblement semi-cylindrique, destinée à la partie basse la plus vers l'avant de la pointe avant. Elle est, par exemple, destinée à envelopper la case de train avant de l'aéronef et au moins une partie de la soute avionique. Elle peut également être plus étendue longitudinalement de manière à envelopper d'autres parties de l'aéronef ;
- une étape d'assemblage E12 consistant à assembler à la structure d'assemblage 4 (formée de la pièce de fuselage 3) la pièce de fuselage 5. Cette étape d'assemblage E12 consiste à amener, comme illustré par une flèche G1, par l'intermédiaire de moyens de déplacement usuels (non représentés et non décrits), la pièce de fuselage 5 sur la structure d'assemblage 4 qui est installée à poste fixe, au niveau d'un poste d'assemblage usuel (non représenté). La pièce de fuselage 5 est amenée, vers le bas, contre la structure d'assemblage 4, dans une position définitive. A l'étape d'assemblage E12, on fixe ensuite, de façon usuelle, la pièce de fuselage 5 sur la structure d'assemblage 4, à savoir sur la pièce de fuselage 3. La pièce de fuselage 5 correspond à une pièce haute (sensiblement) partiellement semi-cylindrique, pour la partie haute la plus vers l'avant de la pointe avant. La pièce de fuselage 5 est destinée à envelopper au moins une partie du poste de pilotage. Elle comprend, notamment, des ouvertures 5A pour les glaces du pare-brise du poste de pilotage ; et
- une étape d'assemblage E13 consistant à assembler à la structure d'assemblage 4 (formée des pièces de fuselage 3 et 5) la pièce de fuselage 6. Cette étape d'assemblage E13 consiste à amener, comme illustré par une flèche G2, par l'intermédiaire de moyens de déplacement usuels (non représentés et non décrits), la pièce de fuselage 6 sur la structure d'assemblage 4. La pièce de fuselage 6 est amenée contre la structure d'assemblage 4 dans une position définitive. A l'étape d'assemblage E13, on fixe ensuite la pièce de fuselage 6 sur la structure d'assemblage 4 de façon usuelle. La pièce de fuselage 6 correspond à une pièce haute sensiblement semi-cylindrique, pour la partie haute la plus vers l'arrière de la pointe avant. La pièce de fuselage 6 est destinée à envelopper une partie du poste de pilotage (à savoir la partie non enveloppée par la pièce de fuselage 5) et/ou une zone de repos de l'équipage et /ou une partie de la cabine de passagers de l'aéronef. Elle comprend, notamment, des ouvertures 6A pour des portes d'accès latérales avant de l'aéronef.

La structure d'assemblage 4 obtenue à la fin de la succession E1 d'étapes d'assemblage représente le corps de fuselage 2. Le corps de fuselage 2 représente une structure présentant un contour allongé (fermé circonférentiellement) qui définit un espace interne partiellement fermé, pourvu au moins d'une ouverture, et notamment uniquement d'une ouverture à l'arrière lorsqu'il est destiné à une pointe avant 1.

La succession E1 d'étapes d'assemblage est réalisée, de préférence, à un seul et même poste d'assemblage.

Le procédé d'assemblage P comprend également une étape de montage E2 (figure 1) mise en œuvre après ladite succession E1 d'étapes d'assemblage.

L'étape de montage E2 consiste à introduire un module de plancher 7 dans le corps de fuselage 2, comme représenté sur la figure 4. Le module de plancher 7 comprend un plancher 8, de type usuel, pourvu notamment de traverses 9 (figures 2, 5 et 6). Le plancher 8 comprend une structure formée d'un ensemble de traverses et de longerons (non représentés) liés ensemble, par exemple sous forme d'un réseau quadrillé, et éventuellement d'un support plan agencé sur cette structure. Le plancher 8 présente une taille prescrite, comme précisé ci-dessous.

Dans un mode de réalisation particulier, le module de plancher 7 comprend uniquement le plancher 8.

En outre, dans un mode de réalisation préféré, le module de plancher 7 comporte également, en plus du plancher 8, un ou plusieurs ensembles 10 d'équipements. Ces équipements correspondent, par exemple, à des pédales pour les pilotes, à au moins un des sièges pour les pilotes, à au moins une partie du tableau de bord et/ou à d'autres équipements usuels du cockpit, ainsi qu'à des câbles électriques et/ou à des câbles de communication de données, ... Ce ou ces ensembles 10 d'équipements sont montés sur et/ou sous le plancher 8. En fonction du mode de réalisation envisagé, on peut prévoir un ou des ensembles 10 avec plus ou moins d'équipements.

Ce mode de réalisation préféré prévoit ainsi d'installer les équipements sur le module de plancher 7 avant son intégration dans le corps de fuselage 2, ce qui présente l'avantage de faciliter l'installation de ces équipements notamment pour des raisons d'encombrement réduit hors du corps de fuselage 2 et de limiter la durée d'assemblage du poste avant puisqu'il n'est plus nécessaire d'installer ces équipements.

Le module de plancher 7, et plus précisément son plancher 8, présentent une taille prescrite, à savoir une largeur prescrite, comme précisé ci-dessous.

L'étape de montage E2 est réalisée à l'aide de moyens usuels permettant de déplacer le module de plancher 7 afin de l'introduire dans le corps de fuselage 2, dans le sens illustré par une flèche F sur la figure 4 (c'est-à-dire à partir de l'arrière, vers l'avant), de manière à l'amener à la position requise dans le corps de fuselage 2.

Le procédé de montage P comprend également une étape de fixation E3 (figure 1) mise en oeuvre après l'étape de montage E2.

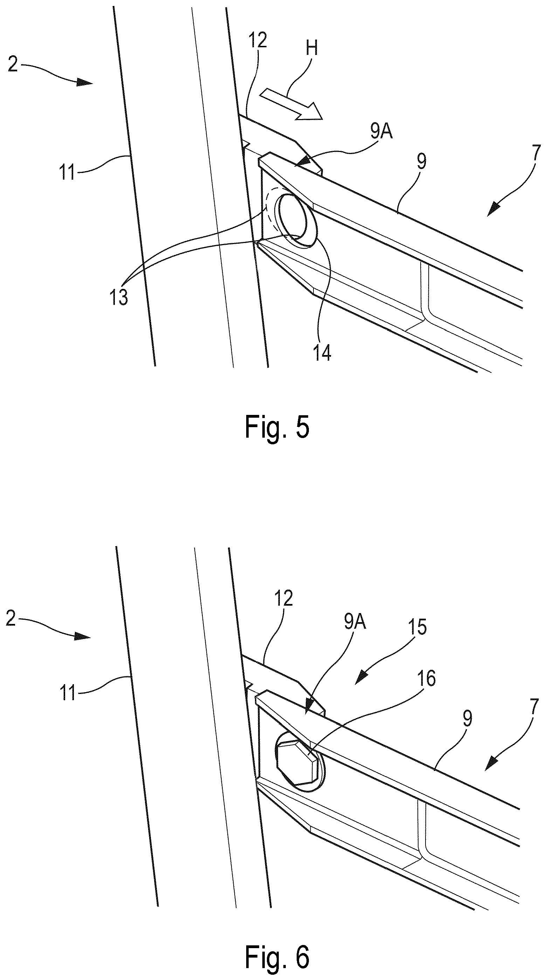

L'étape de fixation E3 consiste à fixer le module de plancher 7, ainsi introduit dans le corps de fuselage 2, audit corps de fuselage 2. La fixation du module de plancher 7 consiste, notamment, à fixer au moins certaines desdites traverses 9 du module de plancher 7 et de préférence l'ensemble des traverses 9 du module de plancher 7, à des parties du corps de fuselage 2 et, de préférence, à des cadres 11 (figures 5 et 6) du corps de fuselage 2. Les traverses 9 à fixer présentent une largeur L prédéterminée (figure 2).

Pour ce faire, on prévoit de fixer chacune des deux extrémités 9A et 9B (figure 2) des traverses 9 considérées, à un cadre 11 du corps de fuselage 2, à un point de fixation 15 (figure 6) précisé ci-dessous. Dans un mode de réalisation préféré, chacune des deux extrémités des traverses 9 est fixée à une patte de fixation 12 solidaire du cadre 11, comme représenté sur les figures 5 et 6 pour l'extrémité 9A. La patte de fixation 12 qui est, par exemple, soudée ou vissée au cadre 11 est pourvue d'un trou 13 (rond) destiné à coopérer avec un trou 14 (rond) similaire, pratiqué à l'extrémité 9A de la traverse 9. La fixation consiste à amener, si cela est nécessaire, le trou 13 de la patte de fixation 12 en superposition du trou 14 de la traverse 9. Pour amener le trou 13 de la patte de fixation 12 à la position du trou 14 de la traverse 9, on peut exercer une action sur le cadre 11 du corps de fuselage 2 qui est légèrement flexible, dans le sens illustré par une flèche H sur la figure 5.

Lorsque la position recherchée est atteinte, la fixation consiste à simplement introduire un élément de fixation 16 dans les trous 13 et 14 superposés de l'extrémité 9A de la traverse 9 et de la patte de fixation 12. Cet élément de fixation 16 peut être un boulon ou tout autre élément de fixation pourvu d'un axe apte à traverser les deux trous 13 et 14 et à réaliser la fixation. Les traverses 9 (et donc le module de plancher 7) peuvent ainsi être fixées rapidement et simplement au corps de fuselage 2. Le point de fixation 15 correspond à la position du centre de l'élément de fixation 16 et des trous 13 et 14, lorsque l'élément de fixation 16 est introduit dans les trous 13 et 14 superposés.

Comme indiqué ci-dessus, le module de plancher 7 présente une forme prescrite prédéterminée, à savoir au moins une largeur prescrite servant de référence (latérale). Plus particulièrement, au moins certaines des traverses 9 et de préférence l'ensemble des traverses 9, liés ensemble au sein du module de plancher 7, présentent une même longueur L prescrite appropriée (figure 2). La longueur L correspond à la longueur entre les centres des trous prévus aux deux extrémités 9A et 9B de la traverse 6, qui sont destinés à la fixation de la traverse 6, tel que le trou 14 prévu à l'extrémité 9A, qui est représenté sur la figure 5. Cette longueur L prescrite appropriée est telle que la fixation du corps de fuselage 2 aux traverses 9 permet d'amener le corps de fuselage 2 à la position appropriée au niveau du plancher 8.

Pour ce faire, il peut être nécessaire d'agir sur le corps de fuselage 2, dans le sens illustré par la flèche H (figure 5), pour l'amener à la position requise par le trou 14 de fixation de la traverse 9. En effet, bien que le corps de fuselage 2 présente initialement une forme appropriée, il est possible qu'il se soit affaissé très légèrement en raison notamment de la gravité ou se soit déformé très légèrement autrement, de manière à présenter avant la fixation du module de plancher 7 un contour externe tel que le contour C1 représenté en tirets sur la figure 2.

Le corps de fuselage 2 présente une certaine flexibilité, par exemple jusqu'à 1 ou 2 mm, qui permet une légère déformation dans le sens de flèches I1 (similaires à la flèche H) sur la figure 2 pour l'amener dans la position requise. Cette position requise est définie par la longueur L des traverses 9 et la position des points de fixation 15 par rapport au corps de fuselage 2.

Le fait d'amener la partie centrale du corps de fuselage 2 dans la forme prescrite par le plancher 8 et requise pour le corps de fuselage 2 à cet endroit, a pour effet que le reste du corps de fuselage 2 prennent également sa forme requise, illustrée par un contour C2 en trait continu sur la figure 2, et notamment à sa partie haute 17 (où le contour se redresse comme illustré par une flèche I2). Le contour C2 représente donc la forme définitive recherchée, obtenue simplement par l'introduction et la fixation du module de plancher 7, sans aucune autre action de mise en forme.

Le module de plancher 7 présente ainsi plusieurs fonctions. En effet, en plus d'une part d'avoir une fonction structurelle usuelle pour supporter des charges et d'autre part de permettre, de façon usuelle, l'installation des systèmes qui sont attachés au plancher 8, il présente une fonction supplémentaire, à savoir une fonction de conformateur de forme pour le corps de fuselage 2 (et donc pour la pointe avant 1), en étant configuré pour permettre d'amener le corps de fuselage 2 (et ainsi la pointe avant 1) dans la forme (contour C2) définitive recherchée.

Dans un mode de réalisation simplifié, les différentes étapes du procédé d'assemblage P, tel que décrit ci-dessus, sont mises en œuvre à un seul et même poste d'assemblage.

En outre, dans un mode de réalisation préféré du procédé d'assemblage P, d'une part, la succession E1 d'étapes d'assemblage, et d'autre part, l'étape de montage E2 et l'étape de fixation E3 sont mises en œuvre à deux postes d'assemblage différents. Ce mode de réalisation préféré permet de réaliser en parallèle différentes étapes du procédé sur des postes d'assemblage différents, ce qui permet de faciliter l'assemblage simultané de plusieurs pointes avant et de réduire la durée d'assemblage de la pointe avant (et donc également de l'aéronef comprenant cette pointe avant).

Le procédé d'assemblage P a été décrit ci-dessus, à titre de mode de réalisation préféré, pour l'assemblage de la pointe avant de l'aéronef. Toutefois, dans le cadre de la présente invention, ledit procédé d'assemblage peut être appliqué à d'autres tronçons de fuselage longitudinaux d'un aéronef, et notamment à tout tronçon de fuselage fermé circonférentiellement et comprenant au moins une ouverture longitudinale.

Le procédé d'assemblage P, tel que décrit ci-dessus, présente de nombreux avantages. En particulier :
- il permet d'utiliser le module de plancher 7 comme référence et comme conformateur de forme ;
- il ne nécessite pas la mise en œuvre d'opérations de moulage/réglage lors de l'intégration du module de plancher 7 ;
- il permet de fixer le module de plancher 7 au corps de fuselage 2, par l'intermédiaire de fixations simples ;
- sa mise en œuvre peut être répétée autant que souhaitée ; et
- une partie des étapes du procédé d'assemblage P peut être réalisée à des postes d'assemblage différents.

## Revendications

1. Procédé d'assemblage d'un tronçon de fuselage d'un aéronef, ledit procédé comprenant :
- une succession (E1) d'étapes d'assemblage (E11, E12, E13) consistant à assembler une pluralité de pièces de fuselage (3, 5, 6) du tronçon de fuselage (1) de l'aéronef de manière à former un corps de fuselage (2) ;
- une étape de montage (E2) consistant à introduire dans le corps de fuselage (2) ainsi formé un module de plancher (7) comprenant une structure formée de traverses (9) et de longerons liés ensemble et présentant au moins une largeur (L) prédéterminée :
**caractérisé en ce qu'**il comprend, de plus, au moins l'étape suivante :
- une étape de fixation (E3) consistant à fixer le corps de fuselage (2) au module de plancher (7), après déformation dudit corps de fuselage (2), le fait d'amener la partie centrale du corps de fuselage (2) dans la forme prescrite par le plancher (8) et requise pour le corps de fuselage (2) à cet endroit, ayant pour effet que le reste du corps de fuselage(2) prenne également sa forme requise, le corps de fuselage affaissé très légèrement en raison notamment de la gravité ayant son contour qui se redresse ( I2), de sorte que le module de plancher (7) présentant une taille prescrite, à savoir une largeur prescrite, conforme la forme finale du corps de fuselage (2), et que l'on obtienne le tronçon de fuselage (1) assemblé, le module de plancher présentant une fonction de conformateur de forme pour le corps de fuselage (2).

2. Procédé selon la revendication 1,
**caractérisé en ce que** l'étape de fixation (E3) consiste au moins à fixer les deux extrémités (9A, 9B) d'au moins certaines desdites traverses (9) du module de plancher (7), de part et d'autre du corps de fuselage (2), à chaque fois en un point dit de fixation (15).

3. Procédé selon la revendication 2,
**caractérisé en ce que** lesdites traverses (9) sont pourvues d'un trou (14) à chacune de leurs deux extrémités (9A, 9B), les deux trous (14) représentant lesdits points de fixation (15), les centres des deux trous (14) étant distants l'un de l'autre de ladite largeur (L) prédéterminée.

4. Procédé selon l'une des revendications 2 et 3,
**caractérisé en ce que** l'étape de fixation (E3) consiste, pour chaque point de fixation (15) entre une extrémité (9A, 9B) d'une traverse (9) et le corps de fuselage (2), à amener un trou (13) pratiqué dans le corps de fuselage (2) en superposition d'un trou (14) pratiqué à l'extrémité (9A) de la traverse (9), puis à insérer un élément de fixation (16) dans les deux trous (13, 14) ainsi superposés.

5. Procédé selon la revendication 4,
**caractérisé en ce que**, pour le corps de fuselage (2), au moins certains des trous (13) sont pratiqués dans des pattes de fixation (12) solidaires de cadres (11) du corps de fuselage (2).

6. Procédé selon l'une quelconque des revendications précédentes,
**caractérisé en ce que** la succession (E1) d'étapes d'assemblage (E11, E12, E13) consiste à prendre une pièce de fuselage (3) comme pièce initiale d'une structure d'assemblage (4) et à assembler l'une après l'autre, étape par étape, les autres pièces de fuselage (5, 6) à cette structure d'assemblage (4).

7. Procédé selon l'une quelconque des revendications précédentes,
**caractérisé en ce que**, d'une part, la succession (E1) d'étapes d'assemblage (E11, E12, E13), et d'autre part, l'étape de montage (E2) et l'étape de fixation (E3) sont mises en œuvre à des postes d'assemblage différents.

8. Procédé selon l'une quelconque des revendications précédentes,
**caractérisé en ce que** ledit tronçon de fuselage correspond à la pointe avant (1) de l'aéronef.

## Patentansprüche

1. Verfahren zur Montage eines Rumpfabschnitts eines Luftfahrzeugs, das Verfahren umfassend:
- eine Abfolge (E1) von Montageschritten (E11, E12, E13), die darin bestehen, eine Mehrzahl von Rumpfteilen (3, 5, 6) des Rumpfabschnitts (1) des Luftfahrzeugs zu montieren, so dass ein Rumpfkörper (2) gebildet wird;
- einen Anbringungsschritt (E2), der darin besteht, in den so gebildeten Rumpfkörper (2) ein Bodenmodul (7) einzuführen, das eine Struktur umfasst, die aus Querträgern (9) und Längsträgern gebildet wird, die miteinander verbunden sind, und mindestens eine vorbestimmte Breite (L) aufweist
**dadurch gekennzeichnet, dass** es ferner mindestens den folgenden Schritt umfasst;
- einen Befestigungsschritt (E3), der darin besteht, den Rumpfkörper (2) nach Verformung des Rumpfkörpers (2) an dem Bodenmodul (7) zu befestigen, wobei die Tatsache, den zentralen Teil des Rumpfkörpers (2) in die durch den Boden (8) vorgeschriebene und für den Rumpfkörper (2) an dieser Stelle erforderliche Form zu bringen, zur Folge hat, dass der Rest des Rumpfkörpers (2) ebenfalls seine erforderliche Form annimmt, wobei der insbesondere aufgrund der Schwerkraft leicht durchhängende Rumpfkörper eine Kontur hat, die sich wieder aufrichtet (I2),
so dass das Bodenmodul (7) eine vorgeschriebene Größe aufweist, d. h. eine vorgeschriebene Breite, die der endgültigen Form des Rumpfkörpers (2) entspricht, und der montierte Rumpfabschnitt (1) erhalten wird, wobei das Bodenmodul eine Formbildnerfunktion für den Rumpfkörper (2) aufweist.

2. Verfahren nach Anspruch 1,
**dadurch gekennzeichnet, dass** der Befestigungsschritt (E3) mindestens darin besteht, die beiden Enden (9A, 9B) mindestens einiger der Querträger (9) des Bodenmoduls (7) beidseits des Rumpfkörpers (2), jeweils an einer sogenannten Befestigungsstelle (15), zu befestigen.

3. Verfahren nach Anspruch 2,
**dadurch gekennzeichnet, dass** die Querträger (9) an jedem ihrer beiden Enden (9A, 9B) mit einem Loch (14) versehen sind, wobei die beiden Löcher (14) die Befestigungsstellen (15) darstellen, wobei die Mittelpunkte der beiden Löcher (14) um die vorbestimmte Breite (L) voneinander beabstandet sind.

4. Verfahren nach einem der Ansprüche 2 und 3,
**dadurch gekennzeichnet, dass** der Befestigungsschritt (E3) für jede Befestigungsstelle (15) zwischen einem Ende (9A, 9B) eines Querträgers (9) und dem Rumpfkörper (2) darin besteht, ein in dem Rumpfkörper (2) ausgebildetes Loch (13) mit einem in dem Ende (9A) des Querträgers (9) ausgebildeten Loch (14) in Überlagerung zu bringen, dann ein Befestigungselement (16) in die beiden so überlagerten Löcher (13, 14) einzusetzen.

5. Verfahren nach Anspruch 4,
**dadurch gekennzeichnet, dass** bei dem Rumpfkörper (2) mindestens einige der Löcher (13) in Befestigungslaschen (12) ausgebildet sind, die mit Spanten (11) des Rumpfkörpers (2) fest verbunden sind.

6. Verfahren nach einem der vorhergehenden Ansprüche,
**dadurch gekennzeichnet, dass** die Abfolge (E1) von Montageschritten (E11, E12, E13) darin besteht, ein Rumpfteil (3) als Ausgangsteil einer Montagestruktur (4) zu nehmen und die anderen Rumpfteile (5, 6) nacheinander schrittweise an dieser Montagestruktur (4) zu montieren.

7. Verfahren nach einem der vorhergehenden Ansprüche,
**dadurch gekennzeichnet, dass** zum einen die Abfolge (E1) von Montageschritten (E11, E12, E13) und zum anderen der Anbringungsschritt (E2) und der Befestigungsschritt (E3) an verschiedenen Montagestationen durchgeführt werden.

8. Verfahren nach einem der vorhergehenden Ansprüche,
**dadurch gekennzeichnet, dass** der Rumpfabschnitt der vorderen Spitze (1) des Luftfahrzeugs entspricht.

## Claims

1. Method for assembling a fuselage portion of an aircraft, said method comprising :
- a succession (E1) of assembly steps (E11, E12, E13) consisting in assembling a plurality of fuselage components (3, 5, 6) of the fuselage portion (1) of the aircraft in such a way as to form a fuselage body (2);
- a mounting step (E2) consisting in introducing, into the fuselage body (2) thus formed, a floor module (7) comprising a structure formed of crossmembers (9) and longerons that are connected together and having at least a predetermined width (L);
**characterized in that** it additionally comprises at least the following step:
- a fastening step (E3) consisting in fastening the fuselage body (2) to the floor module (7), after deformation of said fuselage body (2), bringing the central part of the fuselage body (2) into the shape prescribed by the floor (8) and required for the fuselage body (2) at this location, having the effect that the rest of the fuselage body (2) also adopts its required shape, the fuselage body which has collapsed very slightly due notably to gravity having its contour rectified (I2),
such that the floor module (7) having a prescribed size, namely a prescribed width, shapes the final shape of the fuselage body (2) and the assembled fuselage portion (1) is obtained, the floor module having a function of shaper for the fuselage body (2).

2. Method according to Claim 1,
**characterized in that** the fastening step (E3) consists at least in fastening the two ends (9A, 9B) of at least some of said crossmembers (9) of the floor module (7), on either side of the fuselage body (2), in each case at what is referred to as a fastening point (15).

3. Method according to Claim 2,
**characterized in that** said crossmembers (9) are provided with a hole (14) at each of their two ends (9A, 9B), the two holes (14) representing said fastening points (15), the centres of the two holes (14) being remote from one another by said predetermined width (L).

4. Method according to either of Claims 2 and 3,
**characterized in that** the fastening step (E3) consists, for each fastening point (15) between an end (9A, 9B) of a crossmember (9) and the fuselage body (2), in superposing a hole (13) made in the fuselage body (2) with a hole (14) made at the end (9A) of the crossmember (9), and then in inserting a fastening element (16) into the two holes (13, 14) thus superposed.

5. Method according to Claim 4,
**characterized in that**, for the fuselage body (2), at least some of the holes (13) are made in fastening tabs (12) which are secured to frames (11) of the fuselage body (2).

6. Method according to any one of the preceding claims,
**characterized in that** the succession (E1) of assembly steps (E11, E12, E13) consists in taking a fuselage component (3) as initial component of an assembly structure (4) and in assembling in succession, step by step, the other fuselage components (5, 6) with this assembly structure (4).

7. Method according to any one of the preceding claims,
**characterized in that**, for the one part, the succession (E1) of assembly steps (E11, E12, E13), and, for the other part, the mounting step (E2) and the fastening step (E3) are carried out in different assembly stations.

8. Method according to any one of the preceding claims,
**characterized in that** said fuselage portion corresponds to the nose (1) of the aircraft.
